# EUROPEAN PATENT APPLICATION

(11) **EP 3 453 551 A1**
(43) Date of publication of application: **13.03.2019**
(21) Application number: 17812972.2
(22) Date of filing: 27.03.2017
(51) Int. Cl.: B60K 6/405, B60K 6/365, B60K 6/387, B60K 6/40, B60K 6/442, B60K 17/04, B60L 11/14, F16H 3/54

(54) **TRANSAXLE DEVICE**

(30) Priority: 13.06.2016 JP 2016117007
(71) Applicant: Mitsubishi Jidosha Kogyo Kabushiki Kaisha, Tokyo 108-8410 (JP)
(72) Inventor: OGINO, Daizo, Tokyo 108-8410 (JP); MATSUSHITA, Masahiro, Tokyo 108-8410 (JP)
(74) Representative: Regimbeau
(86) International application number: PCT/JP2017/012273
(87) International publication number: WO 2017/217066

(57) **Abstract**

A transaxle device (1) for a hybrid vehicle including an engine (2), a first rotating electric machine (3), and a second rotating electric machine (4) individually transmits power of the engine (2) and power of the first rotating electric machine (3) to an output shaft (12) on a drive wheel side and also transmits the power of the engine (2) to the second rotating electric machine (4). Further, the transaxle device (1) includes a casing (1C) which includes an attachment surface (1F) attached with the first and second rotating electric machines (3, 4), a counter shaft (15) which is disposed on a power transmission path between an output shaft (12) and an input shaft (11) coaxially connected to a rotating shaft (2a) of the engine (2) inside the casing (1C), and a switching mechanism (20A) which includes a planetary gear (30A) interposed in the counter shaft (15) and switches a high gear stage and a low gear stage. The planetary gear (30A) is disposed at a position near the attachment surface (1F) of the casing (1C) so as not to overlap any of the first and second rotating electric machines (3, 4) when viewed from the attachment surface (1F).

## Description

### Technical Field

The present invention relates to a transaxle device used in a hybrid vehicle including an engine and two rotating electric machines.

### Background Art

Conventionally, among hybrid vehicles including an engine and a rotating electric machine (a motor, a generator, and a motor generator), vehicles traveling while switching traveling modes are in practical use. A traveling mode includes an EV mode in which the vehicle travels only by a motor using charged power of a battery, a series mode in which the vehicle travels only by a motor while driving a generator to generate electric power by an engine, and a parallel mode in which the vehicle travels by using an engine and a motor together. The switching of the traveling mode is performed by controlling a mechanism such as a sleeve or a clutch interposed on a power transmission path inside a transaxle device. This mechanism is disposed on, for example, a shaft inside the power transmission path between the engine and the generator or a shaft inside the power transmission path between the engine and a drive wheel (see Patent Literatures 1 and 2).

### Prior Art Documents

### Patent Documents

Patent Document 1: Japanese Laid-open Patent Publication No.11-170877
Patent Document 2: Japanese Laid-open Patent Publication No. 2013-180680

### Summary of Invention

### Problem to be solved by Invention

Incidentally, when it is possible to switch gears in response to a driver's request output or vehicle speed without switching the traveling mode, a traveling pattern increases and hence improvement of drivability or fuel economy is expected. In order to realize this, a plurality of switchable gears may be provided inside the transaxle device. Here, since an increase in size of the power train including the transaxle device easily tends to cause deterioration of vehicle mountability, the configuration or arrangement of a plurality of gear stages or a mechanism for switching the gear stages becomes necessary in order to suppress an increase in size of the power train.

The invention relates to a transaxle device including a plurality of gear stages and a mechanism for switching the plurality of gear stages. An object of the invention is to suppress an increase in size of a power train. Furthermore, this object is not limited and another object of the invention is to exhibit operations and effects which are derived by each configuration illustrated in the embodiment for carrying out the invention to be described later and which is not obtainable by the conventional technique.

### Solution to Problem

(1) A transaxle device disclosed herein is a transaxle device for a hybrid vehicle including an engine, a first rotating electric machine, and a second rotating electric machine and operable to individually transmit power of the engine and power of the first rotating electric machine to an output shaft on a drive wheel side and also to transmit the power of the engine to the second rotating electric machine, the transaxle device including: a casing which includes an attachment surface attached with the first rotating electric machine and the second rotating electric machine; a counter shaft which is disposed on a power transmission path between the output shaft and an input shaft coaxially connected to a rotating shaft of the engine inside the casing; and a switching mechanism which includes a planetary gear interposed in the counter shaft and switches a high gear stage and a low gear stage, in which the planetary gear is disposed at a position near the attachment surface of the casing so as not to overlap any of the first rotating electric machine and the second rotating electric machine when viewed from the attachment surface. Further, the first rotating electric machine means an electric power generator (a motor generator) or an electric motor which includes a rotating armature or field and has at least an electric motor function. Furthermore, the second rotating electric machine means an electric power generator (a motor generator) or an electric power generator which includes a rotating armature or field and has at least an electric power generator function.
(2) The switching mechanism may include a clutch which is operable to restrain two of components of the planetary gear and a brake which is operable to restrain a sun gear of the planetary gear.
(3) The casing may include a cylindrical portion which protrudes outward in an axial direction around the counter shaft and includes the planetary gear built therein. In this case, the cylindrical portion may be disposed in an area between a rotating shaft of the first rotating electric machine and a rotating shaft of the second rotating electric machine when viewed from the attachment surface.
(4) The transaxle device may further include a connection/disconnection mechanism which is interposed on a power transmission path from the first rotating electric machine to the output shaft and enables or disables the transmission of power of the first rotating electric machine.
(5) The transaxle device may further include a first gear which is provided in the input shaft and transmits the power of the engine to the output shaft and a second gear which is provided in the input shaft separately from the first gear and transmits the power of the engine to the second rotating electric machine.

### Advantageous Effects of Invention

It is possible to provide a plurality of gear stages (a high gear stage and a low gear stage) and a mechanism for switching the gear stages while suppressing an increase in size of a power train.

### Brief Description of Drawings

Fig. 1 is a top view illustrating an internal configuration of a vehicle including a transaxle device according to an embodiment.
Fig. 2 is a schematic side view of a power train including the transaxle device of Fig. 1.
Fig. 3 is a cross-sectional view in which the transaxle device of Fig. 1 is cut in an axial direction along a power transmission path.
Fig. 4(a) is a skeleton diagram illustrating a power train including the transaxle device of Fig. 3 and Fig. 4(b) is an alignment chart.
Fig. 5 is a skeleton diagram illustrating a power train according to a first modified example.
Fig. 6(a) is a skeleton diagram illustrating a power train according to a second modified example and Fig. 6(b) is an alignment chart.
Fig. 7(a) is a skeleton diagram illustrating a power train according to a third modified example and Fig. 7(b) is an alignment chart.
Fig. 8 is a skeleton diagram illustrating a power train according to a fourth modified example.

### Description of Embodiments

A transaxle device of an embodiment will be described with reference to the drawings. Each of the following embodiments is merely an example and there is no intention to exclude the application of various modifications and techniques not mentioned in the following embodiments. The configurations of the embodiments can be modified into various forms without departing from the gist thereof. Further, the configurations can be appropriately selected or combined as appropriate.

### [1. Overall Configuration]

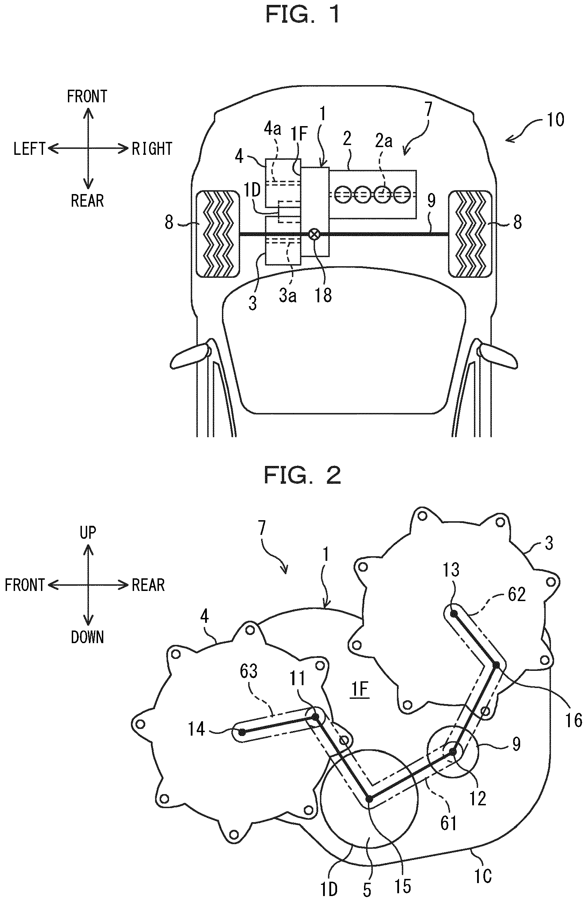

A transaxle 1 (a transaxle device) of the embodiment is applied to a vehicle 10 illustrated in Fig. 1. The vehicle 10 is a hybrid vehicle which includes an engine 2, a traveling motor 3 (an electric motor, a first rotating electric machine), and an electric power generator 4 (an electric power generator, a second rotating electric machine) . The generator 4 is connected to the engine 2 and is operable independently from the operation state of the motor 3. Further, the vehicle 10 is provided with three traveling modes including an EV mode, a series mode, and a parallel mode. These traveling modes are alternatively selected in response to a vehicle state, a travel state, or a driver's request output by an electronic control device (not illustrated) and hence the engine 2, the motor 3, and the generator 4 can be separately used in response to the type. It is to be noted that, the motor 3 may have a power generation function (a function of a generator) and the generator 4 may have an electric motor function (a function of a motor).

The EV mode is a traveling mode in which the vehicle 10 is driven only by the motor 3 using charged power of a driving battery (not illustrated) while the engine 2 and the generator 4 are stopped. The EV mode is selected in a case in which the traveling load and the traveling speed are low or the battery charge level is high. The series mode is a traveling mode in which the vehicle 10 is driven by the motor 3 using power while driving the generator 4 to generate electric power by the engine 2. The series mode is selected in a case in which the traveling load and the traveling speed are intermediate or the battery charge level is low. The parallel mode is a traveling mode in which the vehicle 10 is mainly driven by the engine 2 and the driving of the vehicle 10 is assisted by the motor 3 as appropriate and is selected in a case in which the traveling load and the traveling speed are high.

The engine 2 and the motor 3 are connected in parallel to a drive wheel 8 through the transaxle 1 and the power of each of the engine 2 and the motor 3 is individually transmitted thereto. Further, the generator 4 and the drive wheel 8 are connected in parallel to the engine 2 through the transaxle 1 and the power of the engine 2 is also transmitted to the generator 4 in addition to the drive wheel 8.

The transaxle 1 is a power transmission device which is obtained by integrating a final drive (a final speed reducer) including a differential gear 18 (a differential device, hereinafter referred to as the "differential 18") and a transmission (a speed reducer) and includes a plurality of mechanisms which are in charge of transmission of power between a drive source and a driven device. The transaxle 1 of the embodiment is configured to be switchable between a high/low state (a high speed stage and a low speed stage). When the vehicle travels in the parallel mode, a high gear stage and a low gear stage are switched in response to the travel state or the request output by the electronic control device.

The engine 2 is an internal combustion engine (a gasoline engine or a diesel engine) which burns gasoline or light oil. The engine 2 is a so-called transverse engine in which a direction of a crankshaft 2a (a rotating shaft) is disposed laterally to be aligned with a vehicle width direction of the vehicle 10 and is fixed to the right side surface of the transaxle 1. The crankshaft 2a is disposed in parallel to a drive shaft 9 of the drive wheel 8. The operation state of the engine 2 is controlled by the electronic control device.

Both the motor 3 and the generator 4 are an electric power generator (a motor generator) which has a function of an electric motor and a function of an electric power generator. The motor 3 mainly functions as an electric motor to drive the vehicle 10 and functions as an electric power generator at the time of regeneration. The generator 4 functions as an electric motor (a starter) at the time of starting the engine 2 and generates electric power by the power of the engine at the time of operating the engine 2. An inverter (not illustrated) which converts a DC current and an AC current is provided in the periphery (or the inside) of each of the motor 3 and the generator 4. The rotation speed of each of the motor 3 and the generator 4 is controlled by controlling the inverter. The operation state of each of the motor 3, the generator 4, and each inverter is controlled by the electronic control device.

The motor 3 of the embodiment is formed such that an outer shape is formed in a cylindrical shape using a rotating shaft 3a as a center axis and is fixed to the left side surface 1F (attachment surface) of the transaxle 1 in a posture in which a bottom surface thereof faces the transaxle 1. Further, the generator 4 of the embodiment is formed such that an outer shape is formed in a cylindrical shape using a rotating shaft 4a as a center axis and is fixed to the left side surface 1F of the transaxle 1 in a posture in which a bottom surface thereof faces the transaxle 1 similarly to the motor 3.

Fig. 2 is a side view when the engine 2, the motor 3, the generator 4, and a power train 7 including the transaxle 1 are viewed from the left side. The engine 2 is omitted in the side view. As illustrated in Fig. 2, a pump 5 is fixed to the left side surface 1F of the transaxle 1 in addition to the motor 3 and the generator 4. The pump 5 is a hydraulic pressure generation device which pressure-feeds oil functioning as working oil or lubricating oil to a hydraulic circuit (not illustrated) using power of the drive wheel 8.

### [2. Transaxle]

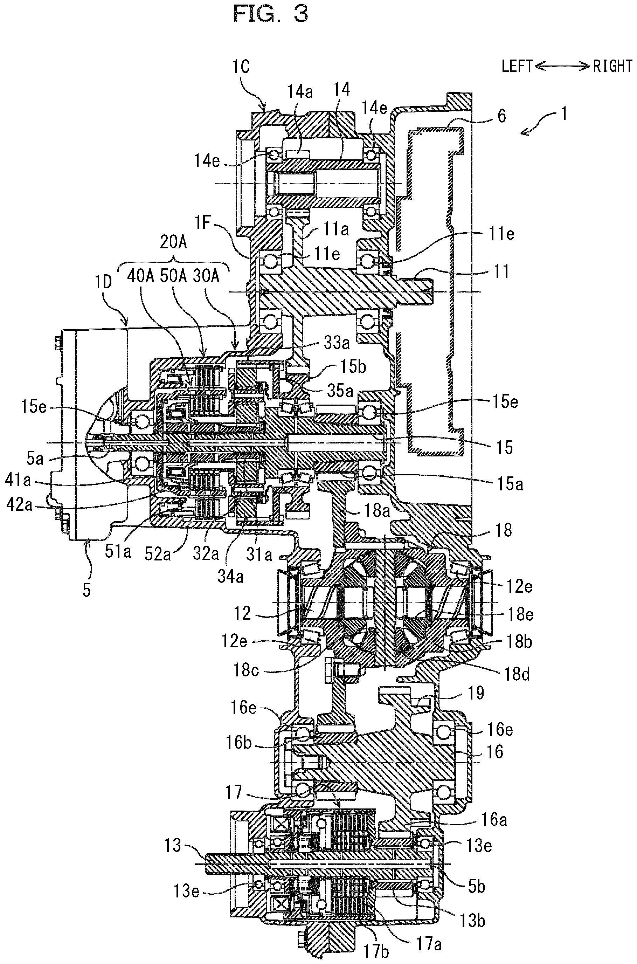

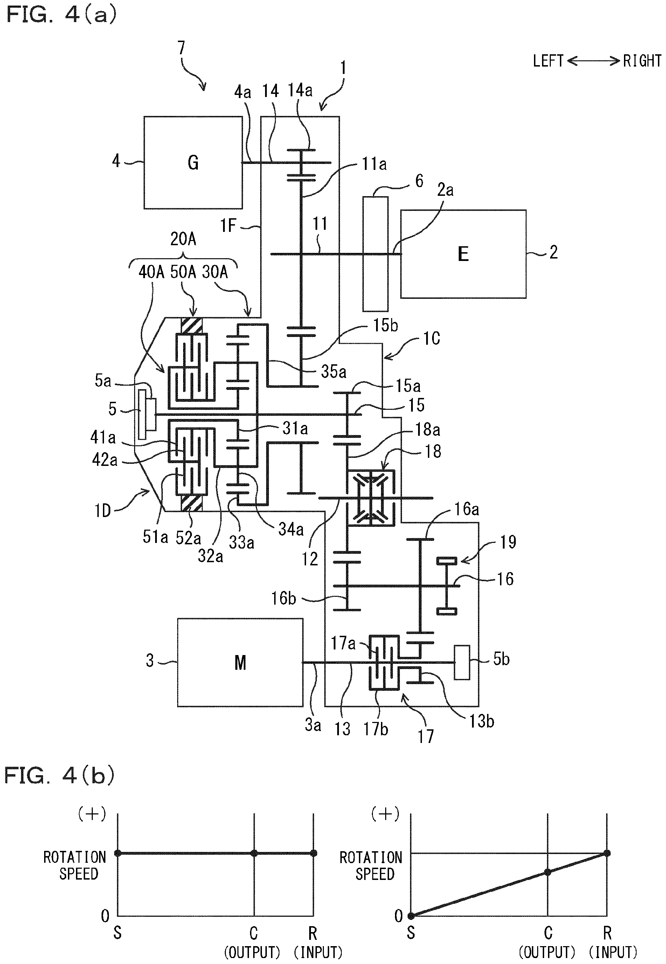

Fig. 3 is a cross-sectional view in which the transaxle 1 of the embodiment is cut in an axial direction along a power transmission path and Fig. 4 (a) is a skeleton diagram of a power train 7 including the transaxle 1. In the skeleton diagram after Figs. 4(a) and 4(b), the pump 5 and the transaxle 1 are illustrated in an integrated state (in a state in which the pump 5 is built in a casing 1C). Fig. 4(b) is an alignment chart. In Fig. 4(b), a vertical axis of the drawing corresponds to a rotation speed (or a rotation speed ratio). Further, S, C, and R of a horizontal axis of the drawing respectively correspond to a sun gear, a carrier, and a ring gear.

As illustrated in Figs. 2 to 4(a), the transaxle 1 is provided with six shafts 11 to 16 which are arranged in parallel. Hereinafter, a rotating shaft coaxially connected to the crankshaft 2a will be referred to as the input shaft 11. Similarly, the rotating shafts respectively coaxially connected to the drive shaft 9, the rotating shaft 3a of the motor 3, and the rotating shaft 4a of the generator 4 will be referred to as an output shaft 12, a motor shaft 13, and a generator shaft 14. Further, a rotating shaft disposed on a power transmission path between the input shaft 11 and the output shaft 12 will be referred to as a first counter shaft 15 and a rotating shaft disposed on a power transmission path between the motor shaft 13 and the output shaft 12 will be referred to as a second counter shaft 16.

As illustrated in Fig. 3, both end portions of all of six shafts 11 to 16 are journaled to the casing 1C through bearings 11e to 16e. Further, an opening is formed in a side surface of the casing 1C located on each shaft of the input shaft 11, the output shaft 12, the motor shaft 13, and the generator shaft 14 and the shafts are connected to the crankshaft 2a and the like through the openings. Furthermore, a torque limiter 6 having a function of protecting the power transmission mechanism by interrupting excessive torque is interposed on the crankshaft 2a. Further, as illustrated in Fig. 4 (a), the rotating shaft of the pump 5 is connected to the first counter shaft 15.

Three power transmission paths are formed inside the transaxle 1. Specifically, a power transmission path (hereinafter, referred to as a "first path 61") extending from the input shaft 11 to the output shaft 12, a power transmission path (hereinafter, referred to as a "second path 62") extending from the motor shaft 13 to the output shaft 12, and a power transmission path (hereinafter, referred to as a "third path 63") extending from the input shaft 11 to the generator shaft 14 are formed as indicated by a two-dotted chain line of Fig. 2.

The first path 61 (the first mechanism) is a path involving in the transmission of the power from the engine 2 to the drive wheel 8 and is charge of the transmission of the power during the operation of the engine 2. A switching mechanism 20A to be described later is interposed in the course of the first path 61 in order to enable or disable the transmission of the power and to switch the high/low state. The second path 62 (the second mechanism) is a path involving in the transmission of power from the motor 3 to the drive wheel 8 and is in charge of the transmission of the power of the motor 3. A connection/disconnection mechanism to be described later is interposed in the course of the second path 62 in order to enable or disable the transmission of the power. The third path 63 (the third mechanism) is a path involving in the transmission of the power from the engine 2 to the generator 4 and is in charge of the transmission of the power at the time of starting the engine 2 and of generating power by the engine 2.

Next, a configuration of the transaxle 1 will be described in detail with reference to Figs. 3, 4(a), and 4(b). In the following description, the "fixed gear" means a gear which is integrated with the shaft and is not rotatable relative to the shaft. Further, the "idle gear" means a gear which is pivotally supported to the shaft so as to be relatively rotatable.

As illustrated in Figs. 3 and 4(a), the input shaft 11 and the generator shaft 14 are respectively provided with fixed gears 11a and 14a. The fixed gears 11a and 14a normally engage with each other. That is, the input shaft 11 and the generator shaft 14 are connected to each other through two fixed gears 11a and 14a so that power can be transmitted between the engine 2 and the generator 4. It is to be noted that, a fixed gear 11a of the input shaft 11 normally engages with an idle gear 15b provided in the first counter shaft 15.

The switching mechanism 20A is interposed in the first counter shaft 15 so as to control the power connection/disconnection state of the engine 2 and to switch the high gear stage and the low gear stage. The switching mechanism 20A includes a planetary gear 30A which is interposed in the first counter shaft 15, a clutch 40A which is operable to restrain two of components of the planetary gear 30A, and a brake 50A which is operable to restrain a sun gear 31a of the planetary gear 30A. The planetary gear 30A is disposed at a position near (adjacent to) the left side surface 1F of the casing 1C so as not to overlap any of the motor 3 and the generator 4 when viewed from the left side surface 1F (that is, in a side view) . The clutch 40A and the brake 50A are disposed near the left side of the planetary gear 30A.

The casing 1C of the embodiment is formed in a cylindrical shape in which the periphery of the first counter shaft 15 protrudes outward (leftward) in the axial direction. The cylindrical protrusion portion (hereinafter, referred to as a "cylindrical portion 1D") is formed with an arrangement and a shape so as not to interfere with any of the motor 3 and the generator 4 when the motor 3 and the generator 4 are attached to the casing 1C. The cylindrical portion 1D of the embodiment is disposed in an area between the rotating shaft 3a (the motor shaft 13) of the motor 3 and the rotating shaft 4a (the generator shaft 14) of the generator 4 when the power train 7 is viewed from the left side surface 1F (the attachment surface) (in a side view). Here, "the area" above mentioned means an area which is orthogonal to a line connecting two shafts 3a and 4a and is interposed between two lines passing through the shafts 3a and 4a in a side view. The switching mechanism 20A is built in the cylindrical portion 1D. Further, the pump 5 is attached to the outer end face (the left side end face) of the cylindrical portion 1D.

The planetary gear 30A includes a sun gear 31a which is formed as an idle gear, a ring gear 33a which is connected to the idle gear 15b through a connection component 35a, a carrier 32a which is disposed between the sun gear 31a and the ring gear 33a, and a pinion gear 34a which is rotatably supported by the carrier 32a and normally engages with the sun gear 31a and the ring gear 33a. Further, the clutch 40A is a multiple disc type clutch which controls the power connection/disconnection state of the engine 2 and the gear stages and includes two engagement components 41a and 42a. The brake 50A is a multiple disc type brake which controls the gear stages along with the planetary gear 30A and the clutch 40A and includes two components 51a and 52a.

The ring gear 33a includes inner teeth engaging with the pinion gear 34a and rotates together with the idle gear 15b. Since the idle gear 15b normally engages with the fixed gear 11a of the input shaft 11, the ring gear 33a is connected to the input shaft 11 through the fixed gear 11a, the idle gear 15b, and the connection component 35a and becomes a component to which the power of the engine 2 is input. One engagement component 41a of the clutch 40A is fixed to the carrier 32a and the first counter shaft 15 is connected thereto. That is, the power of the engine 2 is output from the carrier 32a to the first counter shaft 15 (the drive wheel 8).

The sun gear 31a is pivotally supported to the first counter shaft 15 so as to be relatively rotatable, a right portion thereof is provided with a tooth surface portion engaging with the pinion gear 34a, and the other engagement component 42a of the clutch 40A and the first component 51a of the brake 50A are fixed to a protrusion portion protruding from the left side of the tooth surface portion. Further, the second component 52a of the brake 50A is fixed to the cylindrical surface of the cylindrical portion 1D of the casing 1C.

The clutch 40A is driven in a separating direction (a disengagement direction) and an approaching direction (an engagement direction) of the engagement components 41a and 42a in response to the hydraulic pressure of the oil flowing from a flow passage inlet 5a provided at the left end of the first counter shaft 15. That is, the clutch 40A is releases or restrains the sun gear 31a and the carrier 32a among the components of the planetary gear 30A in response to the hydraulic pressure. It is to be noted that, a hydraulic circuit may be provided with a pressure adjuster which adjusts the hydraulic pressure of the oil pressure-fed from the pump 5 to an appropriate hydraulic pressure. The pressure adjuster includes, for example, a plurality of solenoid valves (an on/off solenoid valve, a linear solenoid valve, and the like) . Further, the brake 50A is driven in a separating direction (a disengagement direction) and an approaching direction (an engagement direction) of two components 51a and 52a to restrain or release the sun gear 31a in response to the hydraulic pressure of the oil flowing from a flow passage inlet (not illustrated).

In the transaxle 1 of the embodiment, in a state in which the clutch 40A is engaged or the brake 50A restrains the sun gear 31a, the power input to the ring gear 33a is output from the carrier 32a and is transmitted to the drive wheel 8. Meanwhile, when the clutch 40A is disengaged and the brake 50A releases the sun gear 31a, the power input to the ring gear 33a is not transmitted to the drive wheel 8. That is, in this case, the transmission of the power of the engine 2 is interrupted.

When the brake 50A is released while the clutch 40A is engaged, the sun gear 31a and the carrier 32a are restrained and rotated together. In this case, since the alignment chart is illustrated at the left side of Fig. 4(b) and the rotation speed is the same for all three components, the gear ratio becomes 1. Meanwhile, when the brake 50A restrains the sun gear 31a while the clutch 40A is disengaged, the rotation of the sun gear 31a is prohibited. In this case, the alignment chart is illustrated at the right side of Fig. 4 (b) and the rotation speed of the carrier 32a (the output) becomes smaller than the rotation speed of the ring gear 33a (the input).

That is, when the rotation of the sun gear 31a is prohibited, the rotation of the engine 2 is decreased (the torque is amplified) and is output from the carrier 32a so that the gear ratio becomes larger than 1. In other words, in this case, the low gear stage is established in a state in which the sun gear 31a and the carrier 32a are restrained (a state of the gear ratio of 1). In this way, in the transaxle 1 of the embodiment, the high gear stage (the gear ratio of 1) and the low gear stage are switched by controlling the brake 50A and the clutch 40A of the switching mechanism 20A. Further, as obvious from the alignment chart, since the rotation of the sun gear 31a is prohibited, the gear ratio of the low gear stage becomes a value close to the gear ratio (the gear ratio of 1) of the high gear stage as compared with a case in which the rotation of the carrier 32a or the ring gear 33a is prohibited.

As illustrated in Figs. 3 and 4(a), in the first counter shaft 15, a fixed gear 15a is provided near the right side of the idle gear 15b. The fixed gear 15a normally engages with a ring gear 18a of the differential 18 provided in the output shaft 12.

The second counter shaft 16 is provided with two fixed gears 16a and 16b. In the fixed gear 16a provided near the right side surface, a left portion is provided with a tooth surface portion which normally engages with an idle gear 13b provided in the motor shaft 13 and a parking gear 19 is integrated with the right side of the tooth surface portion. Meanwhile, the fixed gear 16b which is near the left side surface 1F normally engages with the ring gear 18a of the differential 18.

The idle gear 13b of the motor shaft 13 constitutes a connection/disconnection mechanism along with the motor side clutch 17 interposed in the motor shaft 13. The motor side clutch 17 is a multiple disc type clutch which controls the power connection/disconnection state of the motor 3 and includes an engagement component 17a fixed to the motor shaft 13 and an engagement component 17b fixed to the idle gear 13b. The engagement component 17a is one to which power is input from the motor 3 and the engagement component 17b is one which outputs power to the drive wheel 8. The engagement components 17a and 17b are driven in a separating direction (a disengagement direction) and an approaching direction (an engagement direction) in response to the hydraulic pressure of the oil flowing from the flow passage inlet 5b provided in the motor shaft 13.

When the motor side clutch 17 is engaged, the power of the motor 3 is transmitted to the drive wheel 8 through the idle gear 13b and the fixed gears 16a and 16b and the rotation of the drive wheel 8 is transmitted to the motor 3. That is, in a state in which the motor side clutch 17 is engaged, power running and regenerative power generation by the motor 3 becomes possible. In contrast, when the motor side clutch 17 is disengaged while the vehicle 10 travels by the engine 2 (the motor 3 is stopped), the idle gear 13b idly rotates so that the rotation of the drive wheel 8 is not transmitted to the motor 3. Accordingly, since the motor 3 is not rotated, a resistance decreases.

The parking gear 19 is a component constituting a parking lock device. When a P range is selected by a driver, the parking gear engages with a parking sprag (not illustrated) and the rotation of the second counter shaft 16 (that is, the output shaft 12) is prohibited.

As illustrated in Fig. 3, the differential 18 transmits power transmitted to the ring gear 18a to the output shaft 12 through a differential casing 18b, a pinion shaft 18c, a differential pinion 18d, and a side gear 18e.

### [3. Operation and Effect]

(1) The above-described transaxle 1 is provided with the switching mechanism 20A and the high gear stage and the low gear stage are switched in response to the travel state or the request output when the vehicle travels in the parallel mode. That is, since the power of the engine 2 can be transmitted (output) while being switched into two levels in the parallel mode, it is possible to increase the traveling pattern and to obtain the effect of improving the drivability and the fuel economy and improving the vehicle merchantability. Further, since the switching mechanism 20A includes the planetary gear 30A, it is possible to suppress the generation of sound at the time of switching the high/low state as compared with, for example, a case in which a switching mechanism using a sleeve is provided.
   Further, the planetary gear 30A interposed in the first counter shaft 15 is disposed at a position near the left side surface 1F to which the motor 3 and the generator 4 are attached so as not to overlap any of the motor 3 and the generator 4 in a side view. For this reason, it is possible to suppress an increase in size of the power train 7 including the transaxle 1 while providing a plurality of gear stages (the high gear stage and the low gear stage) and the switching mechanism 20A for switching the plurality of gear stages in the transaxle 1.
   Furthermore, in the above-described vehicle 10, since it is possible to individually output the power of the engine 2 and the power of the motor 3, it is possible to cover a torque omission generated at the time of switching the high/low state with the power of the motor 3. Accordingly, it is possible to suppress shift shock.
(2) In the above-described transaxle 1, the switching mechanism 20A includes the clutch 40A and the brake 50A and the sun gear 31a of the planetary gear 30A is restrained by the brake 50A. Incidentally, since the parallel mode in which the vehicle 10 travels by the power of the engine 2 is a traveling mode which is selected when the traveling load and the traveling speed are high, the gear is shifted at a high vehicle speed range when two gear ratios are set in the parallel mode. For this reason, these gear ratios need to be close to each other. In contrast, in the above-described transaxle 1, since the brake 50A restrains the sun gear 31a, the gear ratios of the high gear stage and the low gear stage can be set to be close to each other.
(3) The casing 1C of the above-described transaxle 1 includes the cylindrical portion 1D which is provided in an area between the rotating shaft 3a (the motor shaft 13) of the motor 3 and the rotating shaft 4a (the generator shaft 14) of the generator 4 so as to protrude outward in a side view. That is, since the cylindrical portion 1D is provided so as not to interfere with the motor 3 and the generator 4, it is possible to assemble the switching mechanism 20A including the planetary gear 30A into the transaxle 1 without increasing the size of the power train 7 by providing the planetary gear 30A inside the cylindrical portion 1D.
(4) According to the above-described transaxle 1, since the connection/disconnection mechanism is interposed on the power transmission path (the second path 62) extending from the motor 3 to the output shaft 12, it is possible to enable or disable the transmission of the power from the motor 3 and to the motor 3. Accordingly, it is possible to prevent the motor 3 from rotating together by interrupting the transmission of the power when the vehicle 10 travels only by the engine 2 (when the motor 3 is stopped) in the parallel mode in which the vehicle 10 travels by the power of the engine 2.

Conventionally, in the transaxle without the connection/disconnection mechanism, a weak field control was performed in order to prevent the generation of the regenerative brake when the motor 3 is rotated at a high speed. However, since power is provided for the control, the weak field control is not desirable from the viewpoint of improving the electricity cost. However, when the weak field control is not performed, a phenomenon occurs in which the regenerative brake is generated regardless of the acceleration state depending on the rotation speed of the motor 3 and hence a driver may feel uncomfortable.

Meanwhile, in the above-described transaxle 1, since the rotation of the motor 3 can be prevented by the connection/disconnection mechanism, the necessity of performing the weak field control can be removed. Accordingly, it is possible to prevent unnecessary power consumption and to improve the electricity cost. Further, since the transmission of the power of the motor 3 is interrupted, the generation of the regenerative brake in an acceleration state can be reliably prevented and the uncomfortable feeling of the driver can be prevented.

### [4. Modified Examples]

The above-described transaxle 1 is an example and a configuration thereof is not limited to the above-described configuration. Hereinafter, modified examples of the transaxle 1 will be described with reference to Figs. 4 to 12. Figs. 4 to 12 are skeleton diagrams illustrating the power train 7 including the transaxle 1 according to first to ninth modified examples. In the components of the above-described embodiment or the modified examples, the same reference numerals as those of the above-described embodiment or the modified examples or the similar reference numerals (reference numerals having the same numbers and different alphabets) will be given to the components and a repetitive description thereof will be omitted.

### [4-1. First Modified Example]

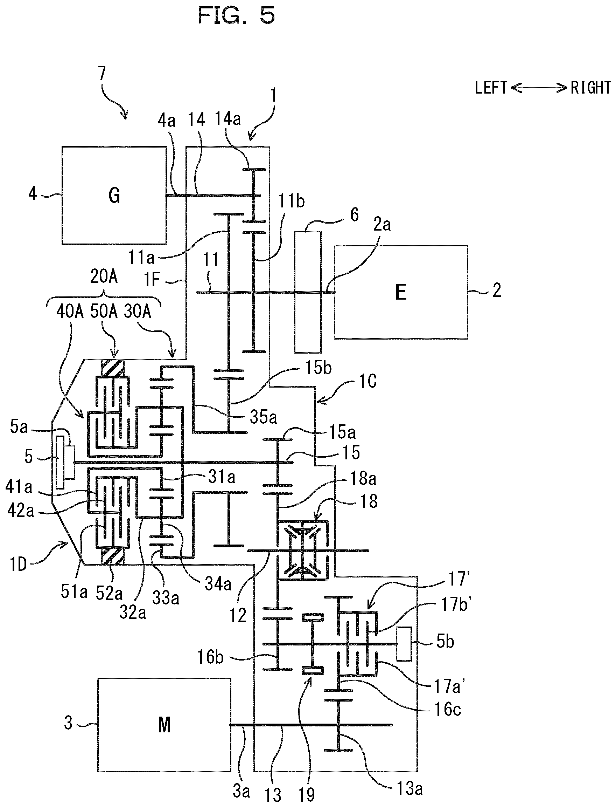

As illustrated in Fig. 5, the transaxle 1 according to the first modified example has the same configuration as that of the above-described embodiment except that a configuration connecting the input shaft 11 and the generator shaft 14 and a configuration of the connection/disconnection mechanism are different. In the transaxle 1 of the modified example, the input shaft 11 is provided with a fixed gear 11b (a second gear) engaging with the fixed gear 14a of the generator 14 and power can be transmitted between the engine 2 and the generator 4 by the fixed gears 11b and 14a. It is to be noted that, the above-described fixed gear 11a (the first gear) normally engages with only the idle gear 15b of the first counter shaft 15.

Further, the transaxle 1 of the modified example is provided with the connection/disconnection mechanism including an idle gear 16c and a motor side clutch 17' interposed in the second counter shaft 16. The idle gear 16c is fixed to one engagement component 17a' of the motor side clutch 17' and normally engages with a fixed gear 13a provided in the motor shaft 13 so as to rotate while following the rotation of the motor shaft 13. The motor side clutch 17' is a multiple disc type clutch which controls the power connection/disconnection state of the motor 3 and includes one engagement component 17a' fixed to the idle gear 16c and the other engagement component 17b' fixed to the second counter shaft 16.

The engagement component 17a' is one to which power is input from the motor 3 and the engagement component 17b' is one which outputs power to the drive wheel 8. The engagement components 17a' and 17b' are driven in a separating direction (a disengagement direction) and an approaching direction (an engagement direction) in response to the hydraulic pressure of the oil flowing from the flow passage inlet 5b provided in the second counter shaft 16. Further, the operation and effect at the time of engaging and disengaging the motor side clutch 17' is the same as that of the above-described embodiment.

Thus, also in the transaxle 1 according to the modified example, it is possible to obtain the same effect from the same configuration as that of the above-described embodiment. Further, the input shaft 11 of the modified example is provided with the fixed gear 11a transmitting power to the output shaft 12 and the fixed gear 11b provided separately from the fixed gear 11a to transmit power to the generator 4. In this way, since the power of the engine 2 is transmitted to the output shaft 12 and the generator 4 by different gears 11a and 11b, the gear ratios thereof can be easily designed to desired values. Furthermore, it is possible to shorten the dimension in a direction (a gear radial direction) orthogonal to the axial direction and to decrease the size of the power train 7.

### [4-2. Second Modified Example]

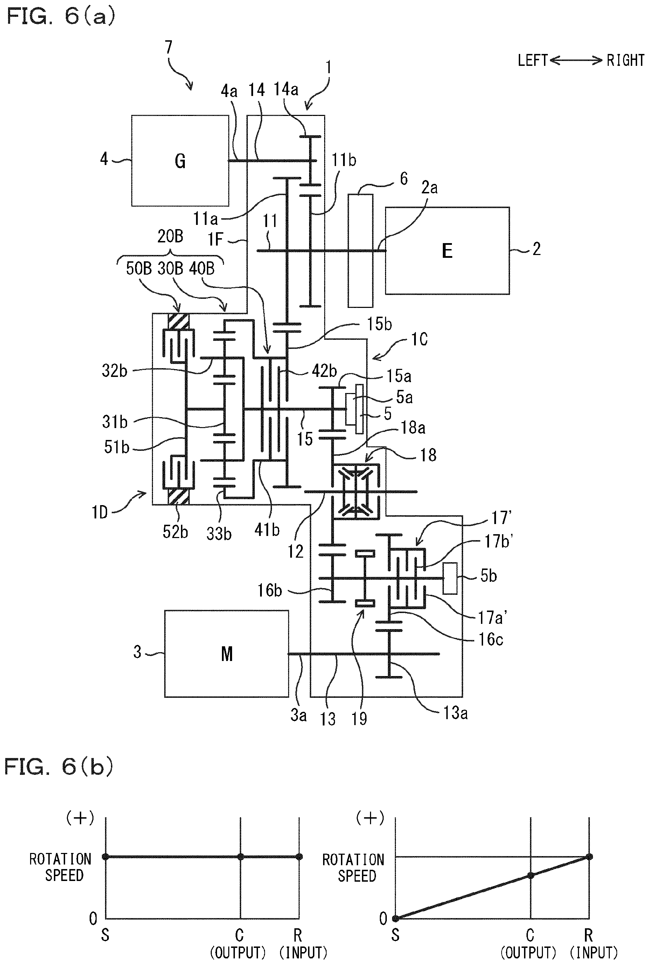

As illustrated in Fig. 6(a), the transaxle 1 according to the second modified example is different from that of the above-described embodiment in that a carrier 32b and a ring gear 33b of a planetary gear 30B are restrained by a clutch 40B. In the modified example, similarly to the first modified example, the input shaft 11 is provided with the fixed gear 11b and the second counter shaft 16 is provided with the connection/disconnection mechanism, but these configurations may be the same as those of the above-described embodiment.

A switching mechanism 20B of the modified example is used to switch the high gear stage and the low gear stage and includes the planetary gear 30B and the clutch 40B interposed in the first counter shaft 15 and a brake 50B. In the planetary gear 30B, the ring gear 33b is connected to the idle gear 15b through one engagement component 41b of the clutch 40B and the carrier 32b is connected to the first counter shaft 15. That is, also in the modified example, the power of the engine 2 is input to the ring gear 33b and is output from the carrier 32b.

Further, a first component 51b of the brake 50B is fixed to the sun gear 31b. When the first component 51b approaches (engages with) the second component 52b fixed to the casing 1C, the sun gear 31b is restrained. Meanwhile, the other engagement component 42b of the clutch 40B is fixed to the first counter shaft 15. The clutch 40B of the modified example is driven in a separating direction (a disengagement direction) and an approaching direction (an engagement direction) of the engagement components 41b and 42b in response to the hydraulic pressure of the oil flowing from the flow passage inlet 5a provided at the right side of the first counter shaft 15. That is, the clutch 40B releases or restrains the carrier 32b and the ring gear 33b among the components of the planetary gear 30B in response to the hydraulic pressure.

Thus, also in the transaxle 1 of the modified example, similarly to the above-described embodiment, in a state in which the clutch 40B is engaged or the brake 50B restrains the sun gear 31b, power input to the ring gear 33b is output from the carrier 32b and is transmitted to the drive wheel 8 through the fixed gear 15a. Meanwhile, when the clutch 40B is disengaged and the brake 50B releases the sun gear 31b, the transmission of the power of the engine 2 is interrupted.

When the brake 50B is released while the clutch 40B is engaged, the carrier 32b and the ring gear 33b are restrained and rotated together. In this case, the alignment chart is illustrated at the left side of Fig. 6 (b). Further, when the brake 50B restrains the sun gear 31b while the clutch 40B is disengaged, the rotation of the sun gear 31b is prohibited. In this case, the alignment chart is illustrated at the right side of Fig. 6(b). As obvious from the alignment chart, also in the transaxle 1 of the modified example, the high gear stage (the gear ratio of 1) and the low gear stage can be switched similarly to the above-described embodiment. Furthermore, the same other effects as those of the above-described embodiment can be obtained.

### [4-3. Third Modified Example]

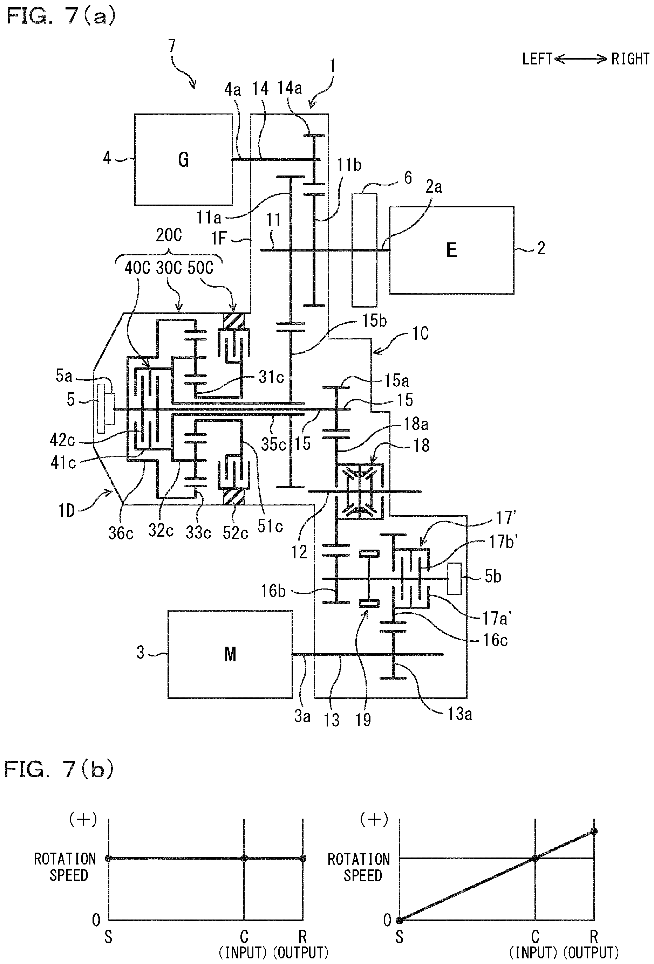

As illustrated in Fig. 7(a), the transaxle 1 according to the third modified example is different from that of the above-described embodiment in that the power input/output path for the planetary gear 30C is different and the carrier 32c and the ring gear 33c are restrained by a clutch 40C. In the modified example, similarly to the first modified example, the input shaft 11 is provided with the fixed gear 11b and the second counter shaft 16 is provided with the connection/disconnection mechanism, but these configurations may be the same as those of the above-described embodiment.

A switching mechanism 20C of the modified example is used to switch the high gear stage and the low gear stage and includes the planetary gear 30C interposed in the first counter shaft 15, the clutch 40C, and a brake 50C. In the planetary gear 30C, the carrier 32c is connected to the idle gear 15b through the first connection component 35c and the ring gear 33c is connected to the first counter shaft 15 through the second connection component 36c. That is, in the modified example, the power of the engine 2 is input to the carrier 32c and is output from the ring gear 33c.

Further, a first component 51c of the brake 50C is fixed to the sun gear 31c. When the first component 51c approaches (engages with) the second component 52c fixed to the casing 1C, the sun gear 31c is restrained. In the clutch 40C, one engagement component 41c is fixed to the carrier 32c and the other engagement component 42c is fixed to the first counter shaft 15. That is, the clutch 40C of the modified example releases or restrains the carrier 32c and the ring gear 33c among the components of the planetary gear 30C in response to the hydraulic pressure.

In the transaxle 1 of the modified example, in a state in which the clutch 40C is engaged or the brake 50C restrains the sun gear 31c, power input to the carrier 32c is output from the ring gear 33c and is transmitted to the drive wheel 8 through the fixed gear 15a. Meanwhile, when the clutch 40C is disengaged and the brake 50C releases the sun gear 31c, the transmission of the power of the engine 2 is interrupted.

When the brake 50C is released while the clutch 40C is engaged, the carrier 32c and the ring gear 33c are restrained and rotated together. In this case, since the alignment chart is illustrated at the left side of Fig. 7(b) and the rotation speed is the same for all three components, the gear ratio becomes 1. Meanwhile, when the brake 50C restrains the sun gear 31c while the clutch 40C is disengaged, the rotation of the sun gear 31c is prohibited. In this case, the alignment chart is illustrated at the right side of Fig. 7 (b) and the rotation speed of the ring gear 33c (the output) becomes larger than the rotation speed of the carrier 32c (the input).

That is, when the rotation of the sun gear 31c is prohibited, the rotation of the engine 2 is increased and output from the ring gear 33c, the gear ratio becomes smaller than 1. In other words, in this case, the high gear stage is established in a state in which the carrier 32c and the ring gear 33c are restrained (a state of the gear ratio of 1). It is to be noted that, as obvious from the alignment chart, since the rotation of the sun gear 31c is prohibited, the gear ratio of the high gear stage becomes a value close to the gear ratio (the gear ratio of 1) of the low gear stage as compared with a case in which the rotation of the carrier 33c or the ring gear 33c is prohibited.

Thus, also in the transaxle 1 of the modified example, the high gear stage and the low gear stage (the gear ratio of 1) can be switched similarly to the above-described embodiment. Further, the same other effects as those of the above-described embodiment can be obtained.

### [4-4. Fourth Modified Example]

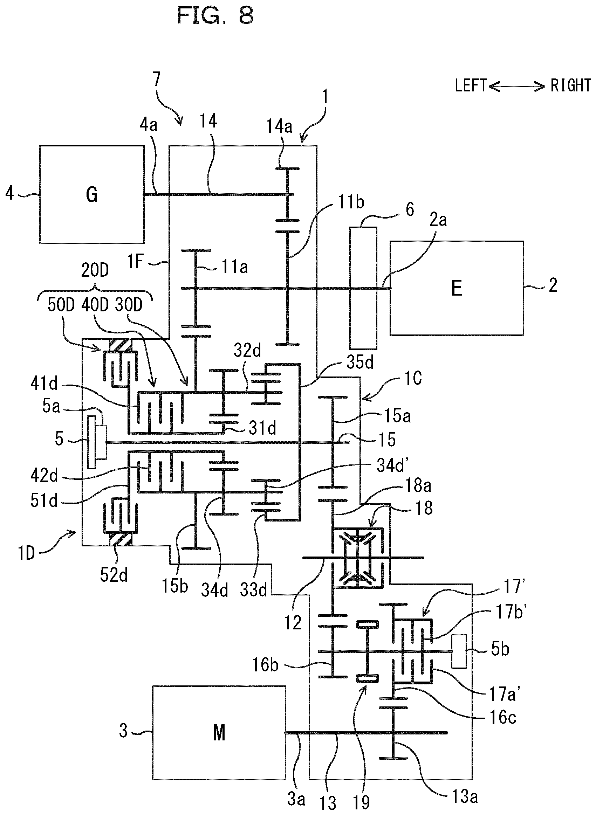

As illustrated in Fig. 8, the transaxle 1 according to the third modified example is different from that of the above-described embodiment in that a planetary gear 30D is of a step pinion type and the power input/output path for the planetary gear 30D is different. Furthermore, in the modified example, similarly to the first modified example, the input shaft 11 is provided with the fixed gear 11b and the second counter shaft 16 is provided with the connection/disconnection mechanism, but these configurations may be the same as those of the above-described embodiment.

The switching mechanism 20D of the modified example is also used to switch the high gear stage and the low gear stage and includes the planetary gear 30D interposed in the first counter shaft 15, a clutch 40D, and a brake 50D. In the planetary gear 30D, a carrier 32d is connected to the idle gear 15b and one engagement component 41d of the clutch 40D is fixed. Further, two pinion gears 34d and 34d' having different number of teeth are rotatably supported by the carrier 32d. One pinion gear 34d having a large number of teeth normally engages with the sun gear 31d and the other pinion gear 34d' having a small number of teeth normally engages with the ring gear 33d. The ring gear 33d is connected to the first counter shaft 15 through the connection component 35d. That is, in the modified example, the power of the engine 2 is input to the carrier 32d and is output from the ring gear 33d.

Further, similarly to the above-described embodiment, the sun gear 31d is provided as the idle gear so that the other engagement component 42d of the clutch 40D and a first component 51d of the brake 50D are fixed thereto. Furthermore, the second component 52d of the brake 50D is fixed to the casing 1C. That is, also in the modified example, the clutch 40D restrains or releases the sun gear 31d and the carrier 32d in response to the hydraulic pressure and the brake 50D restrains or releases the sun gear 31d in response to the hydraulic pressure.

In the transaxle 1 of the modified example, in a state in which the clutch 40D is engaged or the brake 50D restrains the sun gear 31d, power input to the carrier 32d is output from the ring gear 33d and is transmitted to the drive wheel 8 through the fixed gear 15a. Meanwhile, when the clutch 40D is disengaged and the brake 50D releases the sun gear 31d, the transmission of the power of the engine 2 is interrupted.

When the brake 50D is released while the clutch 40D is engaged, the sun gear 31d and the carrier 32d are restrained and rotated together and hence the gear ratio becomes 1. Meanwhile, when the brake 50D restrains the sun gear 31d while the clutch 40D is disengaged, the rotation of the sun gear 31d is prohibited and hence the rotation speed of the ring gear 33d (the output) becomes larger than the rotation speed of the carrier 32d (the input) . That is, in this case, since the rotation of the engine 2 is increased and output from the ring gear 33d, the gear ratio becomes smaller than 1 (the high gear stage).

Thus, also in the transaxle 1 of the modified example, the high gear stage and the low gear stage (the gear ratio of 1) can be switched similarly to the above-described embodiment. In addition, the same other effects as those of the above-described embodiment can be obtained.

### [5. Others]

While the embodiment and the modified examples of the invention have been described, the invention is not limited to the above-described embodiment and the like and can be modified into various forms without departing from the gist of the invention. For example, the switching mechanism may be configured to switch one component other than the sun gear of the planetary gear by the brake and to switch the high gear stage and the low gear stage by restraining two components by the clutch.

Further, the relative positions of the engine 2, the motor 3, the generator 4, and the pump 5 with respect to the transaxle 1 are not limited to the above-described examples. In response to these relative positions, the arrangement of six shafts 11 to 16 inside the transaxle 1 may be set. Further, the arrangement of the gears provided in the respective shafts inside the transaxle 1 is also exemplary and is not limited to the above-described example. Furthermore, the motor side clutch 17 interposed in the second path 62 involving in the transmission of the power from the motor 3 to the drive wheel 8 may be omitted.

### Reference Signs List

1 TRANSAXLE (TRANSAXLE DEVICE)
1C CASING
1D CYLINDRICAL PORTION
1F LEFT SIDE SURFACE (ATTACHMENT SURFACE)
2 ENGINE
2a CRANKSHAFT (ROTATING SHAFT)
3 MOTOR (ELECTRIC MOTOR, FIRST ROTATING ELECTRIC MACHINE)
3a ROTATING SHAFT
4 GENERATOR (ELECTRIC POWER GENERATOR, SECOND ROTATING ELECTRIC MACHINE)
4a ROTATING SHAFT
8 DRIVE WHEEL
10 VEHICLE
11 INPUT SHAFT
11a FIXED GEAR (FIRST GEAR)
11b FIXED GEAR (SECOND GEAR)
12 OUTPUT SHAFT
15 FIRST COUNTER SHAFT (COUNTER SHAFT)
20A, 20B, 20C, 20D SWITCHING MECHANISM
30A, 30B, 30C, 30D PLANETARY GEAR
31a, 31b, 31c, 31d SUN GEAR (COMPONENT)
32a, 32b, 32c, 32d CARRIER (COMPONENT)
33a, 33b, 33c, 33d RING GEAR (COMPONENT)
40A, 40B, 40C, 40D CLUTCH
50A, 50B, 50C, 50D BRAKE

## Claims

1. A transaxle device for a hybrid vehicle including an engine, a first rotating electric machine, and a second rotating electric machine and operable to individually transmit power of the engine and power of the first rotating electric machine to an output shaft on a drive wheel side and also to transmit the power of the engine to the second rotating electric machine, the transaxle device comprising:
a casing which includes an attachment surface attached with the first rotating electric machine and the second rotating electric machine;
a counter shaft which is disposed on a power transmission path between the output shaft and an input shaft coaxially connected to a rotating shaft of the engine inside the casing; and
a switching mechanism which includes a planetary gear interposed in the counter shaft and switches a high gear stage and a low gear stage,
wherein the planetary gear is disposed at a position near the attachment surface of the casing so as not to overlap any of the first rotating electric machine and the second rotating electric machine when viewed from the attachment surface.

2. The transaxle device according to claim 1,
wherein the switching mechanism includes a clutch which is operable to restrain two of components of the planetary gear and a brake which is operable to restrain a sun gear of the planetary gear.

3. The transaxle device according to claim 1 or 2,
wherein the casing includes a cylindrical portion which protrudes outward in an axial direction around the counter shaft and includes the planetary gear built therein, and
wherein the cylindrical portion is disposed in an area between a rotating shaft of the first rotating electric machine and a rotating shaft of the second rotating electric machine when viewed from the attachment surface.

4. The transaxle device according to any one of claims 1 to 3, further comprising:
a connection/disconnection mechanism which is interposed on a power transmission path from the electric motor to the output shaft and enables or disables the transmission of power of the first rotating electric machine.

5. The transaxle device according to any one of claims 1 to 4, further comprising:
a first gear which is provided in the input shaft and transmits the power of the engine to the output shaft; and
a second gear which is provided in the input shaft separately from the first gear and transmits the power of the engine to the second rotating electric machine.
